Europäisches Patentamt

European Patent Office

Office européen des brevets

(19)

(11) Veröffentlichungsnummer: **0 158 118**

A2

# (12) EUROPÄISCHE PATENTANMELDUNG

(21) Anmeldenummer: 85102512.2

(22) Anmeldetag: 06.03.85

(51) Int. Cl.⁴: **B 29 C 67/14**
//A47C23/06

(30) Priorität: 11.04.84 DE 3413601

(43) Veröffentlichungstag der Anmeldung:
16.10.85 Patentblatt 85/42

(84) Benannte Vertragsstaaten:
AT BE CH DE FR GB IT LI LU NL SE

(71) Anmelder: Grillo-Werke Aktiengesellschaft
Alte Hünxer Strasse 139
D-4223 Voerde 2(DE)

(72) Erfinder: Germar, Engelbert
Drevenacker Strasse 31
D-4230 Wesel 1(DE)

(72) Erfinder: Nepasicky, Jan
Fliederweg 8b
D-4220 Dinslaken(DE)

(72) Erfinder: Kannebley, Günter, Dr. Ing.
Knüfermannsweg 5
D-4100 Duisburg 11(DE)

(74) Vertreter: Selting, Günther, Dipl.-Ing. et al,
Deichmannhaus am Hauptbahnhof
D-5000 Köln 1(DE)

(54) Verfahren und Vorrichtung zur Herstellung von Verbundprofilen.

(57) Zur Herstellung von Verbundprofilen, die einen leichten Stützkern (10) und einen faserverstärkten Mantel aufweisen, wird ein vorgefertigter Stützkern (10) zusammen mit umgebenden Verstärkungssträgen (15) in einen Formkanal (11) eingeführt. In dem Formkanal (11) erfolgt eine Tränkung mit flüssigem Kunstharz und anschließend eine Aushärtung des Kunstharzes, das sich durch mechanische Verhakung mit der offenzelligen Oberfläche des aus Schaumstoffbestehenden Stützkernes (10) verbindet. Der Formkanal (11) kann mit einem Krümmungsradius ausgestattet sein, un z.B. gebogene Verbundprofile, die für Lattenroste von Betten bestimmt sind, herzustellen.

EP 0 158 118 A2

Verfahren und Vorrichtung zur Herstellung von
Verbundprofilen

Die Erfindung betrifft ein Verfahren zur Herstellung
von Verbundprofilen, die einen leichten Stützkern und
mehrere faserverstärkte Wände aufweisen, eine Vorrichtung zur Durchführung des Verfahrens sowie ein nach dem
Verfahren hergestelltes Verbundprofil.

Ein Anwendungsfall derartiger Verbundprofile sind Lattenroste von Betten. Für Bett- oder Lattenroste verwendet man in der Regel Latten aus Buchenholz. Es sind
aber auch derartige Latten bekannt (DE-GM 79 30 103),
die aus Kunststoff bestehen. Da die Latten von Lattenrosten hohen Biegebeanspruchungen und häufigen Lastwechseln ausgesetzt sind, erfordern sie, soweit sie aus
einem Kunstharz hergestellt sind, einen sehr großen
Anteil von Verstärkungsfasern, in der Regel Glasfasern.
Würde man eine Latte ausschließlich aus faserverstärktem Kunstharz herstellen, dann würde sich wegen des
hohen Glasanteils ein hohes Gewicht der Latte ergeben, das wesentlich größer ist als bei vergleichbaren Buchenholzlatten. Die bekannten Kunststofflatten sind aus Gründen der Gewichts- und Kostenersparnis als Verbundprofile ausgebildet, die einen Schaumstoffkern und zu beiden Seiten des Kernes je eine Schicht aus einem faserverstärkten Kunstharz aufweisen. Die längslaufenden Schmalseiten des Verbundprofils werden entweder von den Rändern der drei Schichten gebildet oder sie sind mit einer nicht armierten Schaumstoffschicht überzogen. Diese Ränder leisten also keinen Beitrag zur Übernahme von Schubkräften bei Biegebeanspruchung. Die Herstellung der bekannten Verbundprofile erfolgt dadurch, daß die einzelnen Schichten separat vorgefertigt und anschließend miteinander verbunden werden. Dieses Verfahren ist nicht nur aufwendig, sondern es birgt auch die Gefahr des Ablösens der einzelnen Schichten an den Grenzflächen.

Der Erfindung liegt die Aufgabe zugrunde, ein Verfahren der eingangs genannten Art anzugeben, das eine kostengünstige Herstellung qualitativ hochwertiger Verbundprofile im Durchlaufbetrieb ermöglicht.

Gemäß einer ersten Variante der Erfindung wird diese Aufgabe dadurch gelöst, daß ein vorgefertigter Stützkern gemeinsam mit längs seiner Oberfläche geführten Verstärkungssträngen in einen Formkanal eingeführt wird und daß vor oder nach dem Einführen eine Tränkung der Verstärkungsfasern mit Kunstharz und anschließend eine Aushärtung im kontinuierlichen Durchlaufbetrieb im Formkanal erfolgt, wobei das Kunstharz mit der Oberfläche des Stützkernes verbunden wird.

Nach diesem Verfahren läuft der Stützkern zusammen mit den Verstärkungssträngen in den Formkanal ein. Dabei wird er entsprechend seiner in dem fertigen Verbundprofil vorgesehenen Lage positioniert. Im Einlaufbereich ist der Formkanal von den Verstärkungsfasern und dem Stützkern vollständig ausgefüllt, wobei sich zwischen den Verstärkungsfasern natürlich Luft befindet. Im Innern des Formkanals erfolgt eine Tränkung der Verstärkungsfasern durch Injektion des Kunstharzes. Dabei saugen sich die den Stützkern umgebenden Faserschichten mit Kunstharz voll, während die Luft entweicht. Wenn die Oberfläche des Stützkernes rauh ist, verbindet sich das Kunstharz durch mechanische Verhakung mit der Oberfläche des Stützkernes, wobei eine geringe Penetration des Kunstharzes in den Stützkern erfolgen kann. Auf diese Weise entsteht eine vollflächige und dauerhafte Verbindung der einzelnen Schichten, die auch späteren Biegebeanspruchungen langfristig standhält.

Die Verstärkungsstränge bestehen aus Glasfaserrovings, deren Fasern in Längsrichtung des Verbundprofils orientiert sind. Dies verleiht dem Verbundprofil eine hohe Biegefestigkeit und Steifigkeit. Es ist nicht erforderlich, daß alle Faserstränge in Längsrichtung in die Form eingeführt werden, sondern es können auch quer oder schräg verlaufende Faserstränge vorgesehen sein. Bei Durchbiegungen des Verbundprofils wird der Stützkern verformt. Aus diesem Grunde sollte der Stützkern aus einem zähen und verformbaren Material bestehen, z.B. aus PVC-Schaum. Ein spröder Stützkern eignet sich für dynamisch belastete Profile nicht, da er wegen seiner Starrheit bei den Verformungsvorgängen brechen und zerkrümeln würde.

- 4 -

Der Stützkern wird vorzugsweise aus einem Schaumstoffblock durch Schneiden hergestellt, so daß seine Oberfläche offenzellig ist. An der offenzelligen Oberfläche tritt eine besonders feste mechanische Verhakung mit dem in flüssiger Form injizierten Kunstharz ein.

Gemäß einer zweiten Variante des erfindungsgemäßen Verfahrens ist vorgesehen, daß in einem Formkanal, der einen feststehenden Kern aufweist, Verstärkungsstränge eingeführt werden, daß eine Tränkung der Verstärkungsfasern mit Kunstharz erfolgt und im Bereich des Kernes eine mindestens teilweise Aushärtung vorgenommen und dadurch ein Hohlprofil erzeugt wird und daß durch den Kern hindurch in das Innere des Hohlprofiles ein schäumbares Material geleitet wird, das nach dem Aufschäumen das Hohlprofil ausfüllt.

Bei dieser zweiten Variante werden keine vorgefertigten Stützkerne zur Herstellung der Verbundprofile benutzt. Sämtliche Schichten werden in dem Formkanal erzeugt und stufenweise zum Aushärten gebracht. Dem Formkanal werden lediglich die flüssigen Rohmaterialien zugeführt und das Bilden und Formen der Schichten erfolgt im Innern des Formkanals.

Bei beiden Varianten werden endlose Verbundprofile hergestellt, die anschließend auf die Länge der herzustellenden Abschnitte abgeschnitten werden.

Eine Vorrichtung zur Durchführung der ersten Verfahrensvariante weist einen Formkanal mit einem durchgehend konstanten Profil auf, sowie Vorrichtungen zum Liefern von in den Formkanal einlaufenden Verstärkungssträngen. Diese Vorrichtung ist erfindungsgemäß dadurch gekennzeichnet, daß zwischen den zum Einlaß des Formkanals hinlaufenden Verstärkungssträngen eine Führungsvorrichtung für einen in fester Zuordnung zu den Wänden
des Formkanals zu haltenden Stützkern angeordnet ist.

Die Führungsvorrichtung ist zweckmäßigerweise so ausgerichtet und angeordnet, daß sie den Stützkern in
einem konstanten Abstand von den Wänden des Formkanals
hält, während der Stützkern zusammen mit den Verstärkungssträngen in den Formkanal eingezogen wird. Im Einlaufbereich des Formkanals ist eine Fixierung des
Stützkerns nicht mehr erforderlich, weil der Stützkern
hier von den ihn in dichter Packung umgebenden Verstärkungssträngen zentriert gehalten wird.

Eine Vorrichtung zur Durchführung der zweiten Verfahrensvariante ist dadurch gekennzeichnet, daß im Einlaß
des Formkanals ein Kern angeordnet ist, der einen Kanal
zum Zuführen eines schäumbaren Materials in das Hohlprofil aufweist. Der Kern, der in fester räumlicher
Zuordnung zum Formkanal gehalten wird, jedoch von dessen Wänden einen Abstand hat, dient der Zuführung des
schäumbaren Materials, das im Innern des Hohlprofils
aufschäumt und mit diesem aushärtet. Während des Aufschäumens befindet sich das Hohlprofil noch im Formkanal, so daß es von den Wänden des Formkanals gegen
den beim Schäumen entstehenden Druck abgestützt wird.

Nach der Erfindung können faserverstärkte Kunststoffprofile mit Stützkern hergestellt werden, bei denen der
Stützkern von einem faserverstärkten Hohlprofil vollständig umschlossen ist, es können jedoch auch solche
Profile hergestellt werden, bei denen der Stützkern an
mindestens einer Seite freiliegt. Wenn die Verbundpro-

D158118

file für Lattenroste von Betten bestimmt sind, sollte zweckmäßigerweise der Stützkern vollständig umschlossen sein. Bei Biegebeanspruchung werden die äußeren Schichten des Verbundprofils am stärksten belastet, so daß diese Schichten aus dem faserverstärkten Kunststoff bestehen sollten.

Gemäß einer bevorzugten Weiterbildung der Erfindung ist vorgesehen, daß der Formkanal einen bogenförmigen Verlauf hat. Damit ist es möglich, gebogene Verbundprofile herzustellen, wie sie z.B. für Lattenroste benötigt werden. Das den Formkanal verlassende Profil braucht anschließend nur noch auf Länge geschnitten zu werden.

Eine nach dem erfindungsgemäßen Verfahren hergestelltes Verbundprofil, die für Lattenroste verwendbar ist, zeichnet sich dadurch aus, daß die faserverstärkten Wände den Schaumstoffkern an allen vier Seiten, jedoch nicht an den beiden Stirnseiten, umschließen und ein geschlossenes Kastenprofil bilden. Bei einem derartigen Verbundprofil tragen auch die längslaufenden Schmalwände zum Widerstandsmoment bei. Durch Veränderung der Wandstärke dieser Schmalwände bzw. Zugabe von querverlaufenden Fasersträngen kann die Schubfestigkeit und damit die Biegefestigkeit des Verbundprofils in geeigneter Weise beeinflußt werden. Erforderlichenfalls kann im Innern der Verbundleiste ein parallel zu den Schmalwänden verlaufender Mittelsteg vorgesehen sein. In diesem Fall sind zwei Schaumstoffkerne vorgesehen, von denen jeder auf einer anderen Seite des Mittelsteges verläuft. Die längslaufenden Schmalwände schützen den Kunststoffkern gegen mechanische Beschädigungen und gegen Zerbröckeln.

Im folgenden werden unter Bezugnahme auf die Zeichnungen Ausführungsbeispiele der Erfindung näher erläutert.

Es zeigen:

Fig. 1    einen schematischen Längsschnitt durch eine Vorrichtung zur Herstellung von Verbundprofilen,

Fig. 2    eine Ansicht der Vorrichtung nach Fig. 1 aus Richtung des Pfeiles II,

Fig. 3    eine perspektivische Ansicht einem mit der Vorrichtung hergestellten Verbundprofil zur Herstellung eines Lattenrostes für ein Bett,

Fig. 4    einen Längsschnitt durch eine zweite Ausführrungsform der Vorrichtung und

Fig. 5    einen Längsschnitt durch eine dritte Ausführungsform.

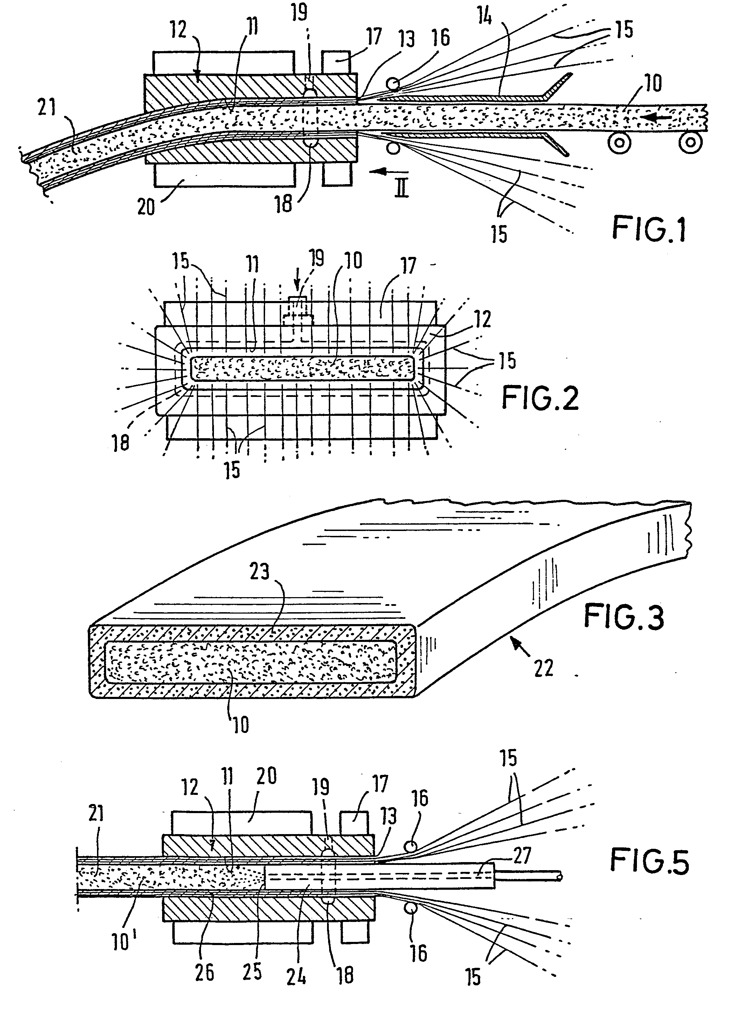

Bei dem Ausführungsbeispiel der Fign. 1 und 2 wird ein vorgefertigter Stützkern 10 aus einem langgestreckten Schaumstoffstreifen mit rechteckigem Querschnitt in den Formkanal 11 einer Form 12 eingeführt. Vor dem Einlaß 13 des Formkanals 11 ist eine Führungsvorrichtung 14 aus Blechen angeordnet, die ortsfest so montiert sind, daß der Stützkern 10 zentrisch in den Formkanal 11 derart einläuft, daß er konstanten Abstand zu allen vier Wänden des Formkanals 11 hat.

Um den Stützkern 10 herum sind zahlreiche Faserstränge 15 bzw. Faserrovings angeordnet, die von (nicht dargestellten) Vorratsrollen abgezogen werden und ebenfalls in den Formkanal 11 einlaufen. Vor dem Einlaß 13 des Formkanals 11 ist ein Führungsring 16 angeordnet, durch den der Stützkern 10 und die Führungsvorrichtung 14 hindurchgeht. Zwischen dem Führungsring 16 und der Führungsvorrichtung 14 laufen die Faserstränge 15 in geordneter dichter Packlage hindurch. Der Führungsring 16 bewirkt, daß die schrägankommenden Faserstränge 15 umgelenkt und unter einem flachen Winkel in den Führungskanal 11 eingeführt werden. Die Faserstränge 15 bestehen aus Glasfasermaterial. Am Einlaß 13 des Formkanals 11 werden die Faserstränge 15 in dem ringförmigen Spalt zwischen dem Stützkern 10 und der Wand des Formkanals 11 zusammengedrückt. In dem Einlaufbereich des Formkanals 11 ist an der Form 12 eine Kühlvorrichtung 17 angebracht. Hinter dem Bereich der Kühlvorrichtung 17 befindet sich in der Wand des Formkanals 11 eine umlaufende Nut 18, in die eine Injektionsleitung 19 mündet. Durch die Injektionsleitung 19 wird flüssiges Kunstharz unter Druck in die Nut 18 und zwischen die Fasern der Verstärkungsstränge 15 geleitet. Dieses Kunstharz wird in einer (nicht dargestellten) Heizvorrichtung vorgewärmt und es füllt die Zwischenräume zwischen den Fasern vollständig aus. Die Kühlvorrichtung 17 verhindert, daß das wärmehärtbare flüssige Kunstharz im Bereich des Formkanals von der Nut 18 bis zum Einlaß 13 unter Wärmeeinwirkung reagiert und frühzeitig aushärtet. Die Kühlvorrichtung 17 hat zu diesem Zweck eine thermische Regelung.

Hinter der Ringnut 18 ist an der Form 12 eine Heizvorrichtung 20 angebracht. Ferner hat der Formkanal 11 in diesem Bereich einen gekrümmten Verlauf, wodurch der gebildete Lattenstrang ebenfalls bogenförmig wird. In diesem gekrümmten Bereich des Formkanals 11 erfolgt das thermische Härten des Kunstharzes. Der die Form 12 verlassende Lattenstrang 21 ist bereits fest, so daß an ihm (nicht dargestellte) Abzugsvorrichtungen angreifen können, die auch das Einziehen des Stützkernes 10 und der Faserstränge 15 in die Form 12 bewirken.

Der Stützkern 10 besteht aus einem langgestreckten Strang mit rechteckigem Querschnitt. Dieser Strang ist vorgefertigt und anschließend durch Schneiden auf die erforderliche Querschnittsform gebracht worden. Beim Schneiden des Schaumstoffblocks sind offenzellige Außenflächen entstanden. In diese Zellen dringt im Innern des Formkanals 11 das flüssige Kunstharz ein, um eine innige Verbindung zwischen dem Stützkern 10 und dem zunächst noch flüssigen Kunstharz herzustellen.

Fig. 3 zeigt das fertige Verbundprofil 22. Man erkennt, daß der Stützkern 10, der einen rechteckigen Querschnitt hat, an allen vier Seiten seines Umfangs von einer Schicht 23 aus faserverstärktem Kunstharz umgeben ist. Lediglich an den Stirnseiten liegt der Stützkern 10 frei.

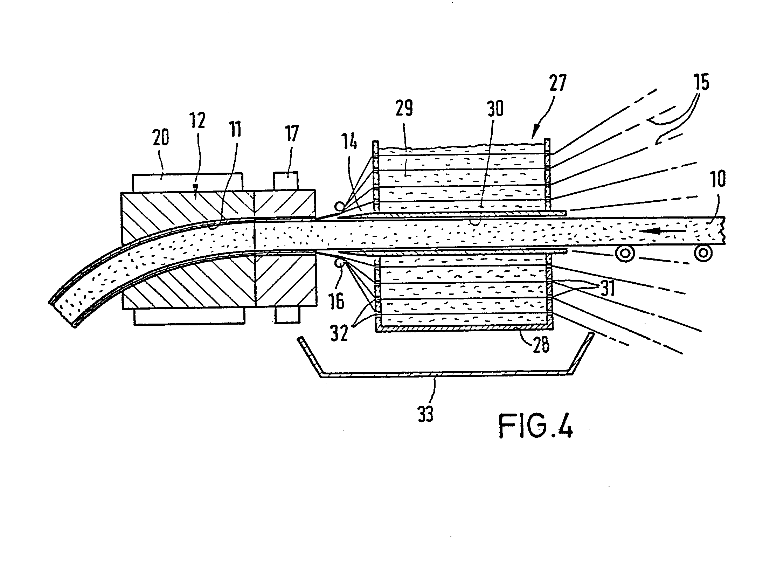

In Fig. 4 ist ein zweites Ausführungsbeispiel der ersten Variante dargestellt, bei dem die Tränkung der Faserstränge 15 nicht im Formkanal 11, sondern in einem Tränkungsbad 27 erfolgt, das vor der Form 12 angeordnet ist. Das Tränkungsbad 27 weist einen Behälter 28 auf, der mit dem flüssigen Harz 29 gefüllt ist. Durch den Behälter 28 führt ein horizontaler Kanal 30 hindurch, der durch Wände von dem Behälterinnern getrennt ist. Der Querschnitt dieses Kanals 30 entspricht dem Querschnitt des Stützkernes 10, der durch den Kanal 30 hindurch der Form 12 zugeführt wird. Die Wände des Kanals 30 bilden die Führungsvorrichtung 14, die dafür sorgt, daß der Stützkern 10 in bezug auf den Einlauf des Formkanales 11 zentriert gehalten wird. Diese Führungsvor-

0158118

richtung 14 erstreckt sich über die rückwärtige Wand des Behälters 28 hinaus bis in den Führungsring 16 hinein. In der vorderen Stirnwand des Behälters 28 ist für jeden der Faserstränge 15 eine Öffnung 31 vorgesehen und in der rückwärtigen Stirnwand des Behälters ist für jeden der Faserstränge 15 eine Öffnung 32 vorgesehen. Diese Öffnungen sind so bemessen, daß die Faserstränge hindurchgehen können, daß aber keine wesentliche Menge des flüssigen Harzes aus den Öffnungen frei auslaufen kann. Im Innern des Behälters 28 können (nicht dargestellte) Umlenk- oder Abquetschvorrichtungen vorgesehen sein, um aus den Fastersträngen 15 die darin enthaltene Luft auszuquetschen. Das Tränkbad 27 dient dazu, die Faserstränge 15 mit dem flüssigen Harz zu tränken, bevor sie in die Form 12 bzw. den Formkanal 11 einlaufen. Im Formkanal 11 erfolgt dann nur noch das thermische Härten des Harzes unter der Wirkung der Heizvorrichtung 20. Die Kühlvorrichtung 17, die am Anfang des Formkanals 11 angeordnet ist, verhindert das vorzeitige Aushärten.

Die Faserstränge 15 laufen, wie bei dem ersten Ausführungsbeispiel, so in den Formkanal 11 ein, daß sie den Stützkern 10 von allen Seiten her umgeben. In das Tränkbad 27, das den Formkanal 10 ebenfalls umgibt, laufen die Faserstränge 15 strahlenförmig ein. Im Innern des Behälters 28 verlaufen die Faserstränge 15 parallel zueinander und nach dem Verlassen des Behälters 28 laufen sie sternförmig auf die Innenseite des Führungsrings 16 zu.

Unter dem Behälter 28 ist eine Wanne 33 angeordnet, die dazu dient, abtropfendes Harz aufzufangen und in den Behälter 28 zurückzuleiten. Die Wanne 33 erstreckt sich bis unter den Einlauf der Form 12, um auch solches Harz aufzufangen, das am Einlauf der Form abgequetscht wird.

Auch bei dem Ausführungsbeispiel der Fig. 4 ist der Formkanal 11 gekrümmt ausgebildet, um bogenförmige Verbundprofile zu erzeugen. Der Außenradius der Krümmung ist mit R und der Innenradius der Krümmung mit r bezeichnet. Beide Radien haben denselben Mittelpunkt. Dieser Mittelpunkt liegt in der Ebene der vertikalen Begrenzungsfläche, die den gekühlten Einlaufteil von dem beheizten Formteil der Form 12 trennt.

Bei dem Ausführungsbeispiel der Fig. 5 wird der Stützkern 10' nicht vorgefertigt, sondern er entsteht im Innern der Form 12. In den Einlaß 13 des Formkanals 11 ragt ein Kern oder Dorn 24 hinein, der im Formkanal 11 zentriert ist und einen Abstand von allen Wänden des Formkanales hat. Der Kern 24 hat denselben Querschnitt wie der später entstehende Schaumstoffkern 10'. Die Fasersträhne 15 verlaufen zwischen der Außenseite des Kernes 24 und den Wänden des Formkanals 11. Im Bereich der Nut 18 erfolgt die Tränkung der Fasern mit dem Kunstharz und anschließend das Härten des Kunstharzes im Bereich der Heizvorrichtung 20. Der Kern 24 erstreckt sich vom Einlaß 13 aus so weit bis über die Nut 18 hinaus, daß am Ende 25 des Kernes 24 das Harz mindestens teilweise gehärtet ist. Im Bereich hinter dem Ende 25 des Kernes 24 entsteht ein Hohlprofil 26 aus faserverstärktem Kunstharz. In dieses Hohlprofil hinein tritt aus der Stirnwand des Kernes 24 ein schäumbares Material aus, das durch einen axialen Kanal 27 des Kernes 24 zugeführt wird. Das schäumbare Material expandiert in das Hohlprofil 26 hinein und füllt dieses

0158118

aus, während sich das Hohlprofil 26 noch im Innern des Formkanals 11 befindet.

Die in Fig. 5 gezeigte Vorrichtung hat einen geradlinigen Formkanal 11 und dient somit zur Herstellung geradliniger Verbundprofile. Wenn die in Fig. 3 dargestellten bogenförmigen Verbundprofile mit dieser Vorrichtung hergestellt werden sollen, muß der Formkanal von der Nut 18 aus bogenförmig ausgebildet sein. In diesem Fall muß auch der linke Endabschnitt des Kernes 24 bogenförmig gestaltet sein.

Bei der zweiten Variante, für die ein Ausführungsbeispiel in Fig. 5 dargestellt ist, ist es nicht zwingend erforderlich, daß die Injektion des Harzes im Formkanal 11 erfolgt. Vielmehr kann auch bei dieser Variante die Tränkung vor dem Formkanal durchgeführt werden, so wie dies in Fig. 4 dargestellt ist.

A N S P R Ü C H E

1. Verfahren zur Herstellung von Verbundprofilen, die einen leichten Stützkern und mehrere faserverstärkte Wände aufweisen,

d a d u r c h   g e k e n n z e i c h n e t ,

daß ein vorgefertigter Stützkern (10) gemeinsam mit längs seiner Oberfläche geführten Verstärkungssträngen (15) in einen Formkanal (11) eingeführt wird und daß vor oder nach dem Einführen eine Tränkung der Verstärkungsfasern mit Kunstharz und anschließend eine Aushärtung im kontinuierlichen Durchlaufbetrieb im Formkanal erfolgt, wobei das Kunstharz mit der Oberfläche des Stützkernes (10) verbunden wird.

2. Verfahren nach Anspruch 1, dadurch gekennzeichnet, daß der Stützkern (10) durch Schneiden eines Schaumstoffblockes hergestellt wird, so daß seine Oberfläche offenzellig ist.

3. Verfahren zur Herstellung von Verbundprofilen, die einen leichten Stützkern und mehrere faserverstärkte Wände aufweisen,

d a d u r c h   g e k e n n z e i c h n e t ,

daß in einen Formkanal (11), der einen feststehenden Kern (24) aufweist, Verstärkungsstränge (15) eingeführt werden, daß eine Tränkung der Verstärkungsfasern mit Kunstharz erfolgt und im Bereich des Kernes (24) eine mindestens teilweise Aushärtung vorgenommen und dadurch ein Hohlprofil (26) erzeugt wird und daß durch den Kern (24) hindurch in das Innere des Hohlprofiles ein schäumbares

0158118

Material geleitet wird, das nach dem Aufschäumen das Hohlprofil (26) ausfüllt.

4. Vorrichtung zur Durchführung des Verfahrens nach Anspruch 1 oder 2, mit einem Formkanal (11) mit einem durchgehenden Profil und mit Vorrichtungen zum Liefern von in den Formkanal (11) einlaufenden Verstärkungssträngen,
d a d u r c h   g e k e n n z e i c h n e t ,
daß zwischen den zum Einlaß (13) des Formkanals (11) hinlaufenden Verstärkungssträngen (15) eine Führungsvorrichtung (14) für einen in fester Zuordnung zu den Wänden des Formkanals (11) zu haltenden Stützkern (10) angeordnet ist.

5. Vorrichtung zur Durchführung des Verfahrens nach Anspruch 3, dadurch gekennzeichnet, daß im Einlaß des Formkanals (11) ein Kern (24) angeordnet ist, der mindestens einen Kanal (27) zum Zuführen eines schäumbaren Materials in das Hohlprofil (26) aufweist.

6. Vorrichtung nach Anspruch 4 oder 5, dadurch gekennzeichnet, daß in den Formkanal (11) mindestens eine Injektionsleitung (19) münden und daß der vor der Mündungsstelle der Injektionsleitung (19) liegende Abschnitt des Formkanals (11) gekühlt und der hinter der Mündungsstelle liegende Abschnitt beheizt ist.

7. Vorrichtung nach einem der Ansprüche 4 bis 6, dadurch gekennzeichnet, daß der Formkanal (11) einen bogenförmigen Verlauf hat.

8. Verbundprofil, hergestellt nach dem Verfahren nach einem der Ansprüche 1 bis 3, mit einem Stützkern (10;10') und mehreren faserverstärkten Wänden, d a d u r c h   g e k e n n z e i c h n e t , daß die faserverstärkten Wände (23) den Stützkern (10) an allen vier Seiten, jedoch nicht an den beiden Stirnseiten, umschließen und ein geschlossenes Kastenprofil bilden.

FIG.1

FIG.2

FIG.3

FIG.5

0158118

FIG.4